# EUROPEAN PATENT SPECIFICATION

(11) **EP 2 118 620 B1**
(45) Date of publication and mention of the grant of the patent: **23.11.2011**
(21) Application number: 07804673.7
(22) Date of filing: 30.07.2007
(51) Int. Cl.: G01C 21/36, H04H 20/00

(54) **SYSTEM AND METHOD FOR BROADCASTING NAVIGATION PROMPTS**
SYSTEM UND VERFAHREN ZUM RUNDSENDEN VON NAVIGATIONSAUFFORDERUNGEN
SYSTÈME ET PROCÉDÉ DE DIFFUSION D'INVITES DE NAVIGATION

(30) Priority: 13.02.2007 US 674173
(43) Date of publication of application: 18.11.2009
(73) Proprietor: Sony Ericsson Mobile Communications AB, 221 88 Lund (SE)
(72) Inventor: JENDBRO, Magnus, SE-245 61 Staffanstorp (SE); AGARDH, Kare, SE-257 32 Rydeback (SE)
(74) Representative: Aurell, Henrik
(86) International application number: PCT/IB2007/002183
(87) International publication number: WO 2008/099231

(56) References cited:
- WO-A-96/04632
- US-A1- 2003 186 662
- US-A1- 2005 273 252

## Description

### TECHNICAL FIELD OF THE INVENTION

The present invention relates generally to navigational aids, such as a navigation system that generates voice prompts to direct a driver to a destination. More particularly, the invention relates to a system and method for broadcasting navigational voice prompts using a transmitter, such as an FM transmitter operating in accordance with radio data system (RDS).

### DESCRIPTION OF THE RELATED ART

Navigation systems that output audible prompts through a speaker are known. The audible prompts are intended to provide a driver of a vehicle with directions to reach a destination specified by the driver. Some mobile communication devices, such as mobile telephones, include navigation functions that generate audible "turn-by-turn" directions to a specified destination. Unfortunately, it can be difficult to hear the navigation prompts generated by the built-in speaker of these devices. The difficulty in hearing the prompts becomes more problematic in noisy situations. Noisy situations are common when traveling by vehicle and may be caused by speed-related sounds (e.g., wind and road noise) and/or by music that is played by the vehicle's audio system.

### SUMMARY

To enhance the audibility of navigation prompts from a navigation system that is embodied as part of a portable electronic device, there is a need in the art for a system and method that interfaces the navigation system with an audio system of a vehicle. In this manner, navigation prompts may be audibly output by the vehicle audio system to improve the sound quality and volume of the navigation prompts. There is a further need to integrate the navigation prompts with audio content (e.g., music) that is played though the vehicle audio system and/or to mute the audio playback during output of the navigation prompt.

According to one aspect of the invention, a method of broadcasting navigation prompts to a radio receiver system with an electronic device includes broadcasting a message to the radio receiver system, the message including data that invokes a programmed response by the radio receiver system to carry out at least one of increase a volume level or switch audio sources; and broadcasting a navigation prompt for audible playback by the radio receiver system, the navigation prompt providing a direction to a user for traveling to a specified destination.

According to one embodiment, the method further includes generating the navigation prompt with the electronic device.

According to one embodiment, the method further includes receiving the navigation prompt with the electronic device.

According to one embodiment, the method further includes broadcasting audio content for audible playback by the radio receiver system and mixing the navigation prompt with the audio content.

According to one embodiment of the method, the electronic device is a mobile telephone.

According to one embodiment, the method further includes monitoring a broadcast frequency used to broadcast the navigation prompt for the presence of a radio station and if presence of a radio station is detected, prompting the user to change the broadcast frequency.

According to one embodiment of the method, the monitoring is carried out on a repeated basis based on elapsed time since a previous monitoring.

According to one embodiment of the method, the monitoring is carried out on a repeated basis based on distance traveled since a previous monitoring.

According to one embodiment of the method, broadcasting of the message and the navigation prompt is made using an FM transmitter.

According to one embodiment of the method, the broadcasting is made in accordance with radio data system (RDS).

According to one embodiment of the method, the message contains at least one of a traffic announcement flag or a traffic program flag.

According to another aspect of the invention, a mobile radio terminal includes a broadcast transceiver for generating FM broadcasts in accordance with radio data system (RDS); and a controller configured to control the broadcast transceiver to broadcast a message to a radio receiver system, the message including data that invokes a programmed response by the radio receiver system to carry out at least one of increase a volume level or switch audio sources, and to broadcast a navigation prompt for audible playback by the radio receiver system, the navigation prompt providing a direction to a user for traveling to a specified destination.

According to one embodiment of the mobile radio terminal, the controller generates the navigation prompt.

According to one embodiment of the mobile radio terminal, the mobile radio terminal receives the navigation prompt from an external device.

According to one embodiment of the mobile radio terminal, the controller further controls the broadcast transceiver to broadcast audio content for audible playback by the radio receiver system, the navigation prompt being mixed with the audio content.

According to one embodiment of the mobile radio terminal, the mobile radio terminal is a mobile telephone having call circuitry to establish a call over a communications network.

According to one embodiment of the mobile radio terminal, the controller further controls the broadcast transceiver to monitor a broadcast frequency used to broadcast the navigation prompt for the presence of a radio station.

According to one embodiment of the mobile radio terminal, the monitoring is carried out on a repeated basis based on at least one of elapsed time since a previous monitoring or distance traveled since a previous monitoring.

According to one embodiment of the mobile radio terminal, the message contains at least one of a traffic announcement flag or a traffic program flag.

These and further features of the present invention will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the spirit and terms of the claims appended hereto.

Features that are described and/or illustrated with respect to one embodiment may be used in the same way or in a similar way in one or more other embodiments and/or in combination with or instead of the features of the other embodiments.

It should be emphasized that the terms "comprises" and "comprising," when used in this specification, are taken to specify the presence of stated features, integers, steps or components but do not preclude the presence or addition of one or more other features, integers, steps, components or groups thereof.

### BRIEF DESCRIPTION OF THE DRAWINGS

FIG. 1 is a schematic view of an exemplary navigation system in accordance with an embodiment of the present invention;
FIG. 2 is a schematic block diagram a mobile telephone that represents an exemplary electronic device that may form part of the system of FIG. 1; and
FIG. 3 is a flow chart representing an exemplary method of broadcasting navigation prompts using the mobile telephone of FIG. 2.

### DETAILED DESCRIPTION OF EMBODIMENTS

Embodiments of the present invention will now be described with reference to the drawings, wherein like reference numerals are used to refer to like elements throughout. It will be understood that the figures are not necessarily to scale.

The interchangeable terms "electronic equipment" and "electronic device" include portable radio communication equipment. The term "portable radio communication equipment," which herein after is referred to as a "mobile radio terminal," includes all equipment such as mobile telephones, pagers, communicators, electronic organizers, personal digital assistants (PDAs), smartphones, portable communication apparatus or the like.

In the present application, the invention is described primarily in the context of a mobile telephone. However, it will be appreciated that the invention is not intended to be limited to the context of a mobile telephone and may relate to any type of appropriate electronic equipment, examples of which include a dedicated navigational aid, a media player, a gaming device and a computer.

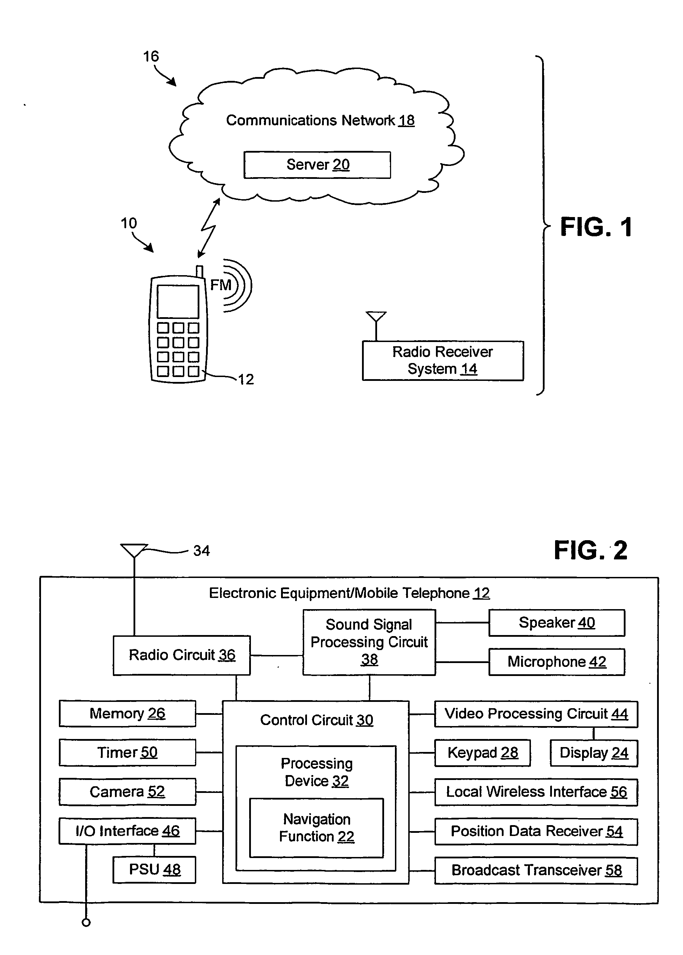

Referring initially to FIG. 1, an exemplary system 10 for providing audible navigation prompts to a user of an electronic device is illustrated. The system 10 may include the electronic device, which is depicted in the illustrated embodiment as a mobile telephone 12. As will be described below, the mobile telephone 12 may be configured to broadcast data for reception by a compatible receiver. In one embodiment, the mobile telephone 12 broadcasts a frequency modulated (FM) signal and the receiver is part of an audio system for a vehicle (e.g., a car radio). Such a radio receiver system 14 will typically include at least a tuner for receiving FM broadcasts and one or more speakers for audibly outputting sounds corresponding to received broadcasts. The radio receiver system 14 may also include alternative audio sources (e.g., a compact disk (CD) player, a tape player, an MP3 player, etc.), appropriate control circuitry (e.g., a radio data system (RDS) controller), an antenna, decoders, amplifiers, and so on. The illustration of a mobile telephone for the transmitting device and of a radio receiver system is for exemplary purposes. Other types of devices may be configured to operate in the system 10 in a similar manner and may replace the mobile telephone and/or the radio receiver system.

The mobile telephone 12 may be configured to operate as part of a communications system 16. The system 16 may include a communications network 18 having a server 20 (or servers) for managing calls placed by and destined to the mobile telephone 12, transmitting data to the mobile telephone 12 and carrying out any other support functions. Network components, including the server 20, may communicate with the mobile telephone 12 via a transmission medium. The transmission medium may be any appropriate device or assembly, including, for example, a communications tower (e.g., a cell tower), another mobile telephone, a wireless access point, a satellite, etc. Portions of the network may include wireless transmission pathways. The network 18 may support the communications activity of multiple mobile telephones. The communications network 18 may be managed and operated by a service provider. It will be appreciated that the network 18 may be typical mobile telephone support network that interfaces with mobile devices under a protocol such as code division multiple access (CDMA) or global system for mobile communications (GSM), or may be some other type of network, such as a WiFi network operating under IEEE standard 802.11 or a WiMax network operating under IEEE 802.16.

With additional reference to FIG. 2, illustrated is a schematic block diagram of the mobile telephone 12. The mobile telephone 12 includes a navigation function 22 that is configured to generate navigation prompts to direct a user to a specified location. Generating the prompts may include tracking the position of the mobile telephone 12 and identifying a route from the current location of the mobile telephone 12 to the destination. While these functions may be included in the navigation function 22 and/or carried out by a remote server, they are relatively well-known in the art of GPS-assisted navigation and will not be described in detailed herein. Additional details and operation of the navigation function 22 will be described in greater detail below. The navigation function 22 may be embodied as executable code that is resident in and executed by the mobile telephone 12. In one embodiment, the navigation function 22 may be a program stored on a computer or machine readable medium. The navigation function 22 may be a stand-alone software application or form a part of a software application that carries out additional tasks related to the mobile telephone 12.

The mobile telephone 12 may include a display 24. The display 24 displays information to a user such as operating state, time, telephone numbers, contact information, various navigational menus, etc., which enable the user to utilize the various features of the mobile telephone 12. The display 24 also may be used to visually display content received by the mobile telephone 12 and/or retrieved from a memory 26. The display 24 may be used to present text, images, video and other graphics to the user, such as photographs, mobile television content and video associated with games.

A keypad 28 provides for a variety of user input operations. For example, the keypad 28 typically includes alphanumeric keys for allowing entry of alphanumeric information such as telephone numbers, phone lists, contact information, notes, text, etc. In addition, the keypad 28 typically includes special function keys such as a "call send" key for initiating or answering a call, and a "call end" key for ending or "hanging up" a call. Special function keys also may include menu navigation and select keys to facilitate navigating through a menu displayed on the display 24. Special function keys may include audiovisual content playback keys to start, stop and pause playback, skip or repeat tracks, and so forth. Other keys associated with the mobile telephone may include a volume key, an audio mute key, an on/off power key, a web browser launch key, a camera key, etc. Keys or key-like functionality also may be embodied as a touch screen associated with the display 24. Also, the display 24 and keypad 28 may be used in conjunction with one another to implement soft key functionality.

The mobile telephone 12 includes call circuitry that enables the mobile telephone 12 to establish a call and/or exchange signals with a called/calling device, typically another mobile telephone or landline telephone. However, the called/calling device need not be another telephone, but may be some other device such as an Internet web server, content providing server, etc. Calls may take any suitable form. For example, the call could be a conventional call that is established over a cellular circuit-switched network or a voice over Internet Protocol (VoIP) call that is established over a packet-switched capability of a cellular network or over an alternative packet-switched network, such as WiFi, WiMax, etc. Another example includes a video enabled call that is established over a cellular or alternative network.

The mobile telephone 12 may be configured to transmit, receive and/or process data, such as text messages (e.g., often referred to by some as "an SMS," which stands for simple message service and is a common standard for handling text messages), electronic mail messages, multimedia messages (e.g., often referred to by some as "an MMS," which stands for multimedia message service and is a common standard for handling multimedia messages), instant messages, image files, video files, audio files, ring tones, streaming audio, streaming video, data feeds (including podcasts) and so forth. Processing such data may include storing the data in the memory 26, executing applications to allow user interaction with the data, displaying text, video and/or image content associated with the data, outputting audio sounds associated with the data and so forth.

The mobile telephone 12 includes a primary control circuit 30 that is configured to carry out overall control of the functions and operations of the mobile telephone 12. The control circuit 30 may include a processing device 32, such as a CPU, microcontroller or microprocessor. The processing device 32 executes code stored in a memory (not shown) within the control circuit 30 and/or in a separate memory, such as the memory 26, in order to carry out operation of the mobile telephone 12. The memory 26 may be, for example, one or more of a buffer, a flash memory, a hard drive, a removable media, a volatile memory, a non-volatile memory or other suitable device.

In addition, the processing device 32 may execute code that implements the navigation function 22. It will be apparent to a person having ordinary skill in the art of computer programming, and specifically in application programming for mobile telephones or other electronic devices, how to program a mobile telephone 12 to operate and carry out logical functions associated with the navigation function 22. Accordingly, details as to specific programming code have been left out for the sake of brevity. Also, while the navigation function 22 is executed by the processing device 32 in accordance with a preferred embodiment of the invention, such functionality could also be carried out via dedicated hardware, firmware, software, or combinations thereof, without departing from the scope of the invention.

Continuing to refer to FIG. 2, the mobile telephone 12 includes an antenna 34 coupled to a radio circuit 36. The radio circuit 36 includes a radio frequency transmitter and receiver for transmitting and receiving signals via the antenna 34. The radio circuit 36 may be configured to operate in a mobile communications system (e.g., the system 16) and may be used to send and receive data and/or audiovisual content. Receiver types for interaction with a mobile radio network and/or broadcasting network include, but are not limited to, GSM, CDMA, WCDMA, GPRS, WiFi, WiMax, DVB-H, ISDB-T, etc., as well as advanced versions of these standards.

The mobile telephone 12 further includes a sound signal processing circuit 38 for processing audio signals transmitted by and received from the radio circuit 36. Coupled to the sound processing circuit 38 are a speaker 40 and a microphone 42 that enable a user to listen and speak via the mobile telephone 12 as is conventional. The radio circuit 36 and sound processing circuit 38 are each coupled to the control circuit 30 so as to carry out overall operation. Audio data may be passed from the control circuit 30 to the sound signal processing circuit 38 for playback to the user. The audio data may include, for example, audio data from an audio file stored by the memory 26 and retrieved by the control circuit 30, or received audio data such as in the form of streaming audio data from a mobile radio service. The sound processing circuit 38 may include any appropriate buffers, decoders, amplifiers and so forth.

The display 24 may be coupled to the control circuit 30 by a video processing circuit 44 that converts video data to a video signal used to drive the display 24. The video processing circuit 44 may include any appropriate buffers, decoders, video data processors and so forth. The video data may be generated by the control circuit 30, retrieved from a video file that is stored in the memory 26, derived from an incoming video data stream received by the radio circuit 36 or obtained by any other suitable method.

The mobile telephone 12 may further include one or more I/O interface(s) 46. The I/O interface(s) 46 may be in the form of typical mobile telephone I/O interfaces and may include one or more electrical connectors. As is typical, the I/O interface(s) 46 may be used to couple the mobile telephone 12 to a battery charger to charge a battery of a power supply unit (PSU) 48 associated with the mobile telephone 12. In addition, or in the alternative, the I/O interface(s) 46 may serve to connect the mobile telephone 12 to a headset assembly (e.g., a personal handsfree (PHF) device) that has a wired interface with the mobile telephone 12. Further, the I/O interface(s) 46 may serve to connect the mobile telephone 12 to a personal computer or other device via a data cable for the exchange of data. The mobile telephone 12 may receive operating power via the I/O interface(s) 46 when connected to a vehicle power adapter or an electricity outlet power adapter.

The mobile telephone 12 also may include a timer 50 for carrying out timing functions. Such functions may include timing the durations of calls, generating the content of time and date stamps, etc.

The mobile telephone 12 may include a camera 52 for taking digital pictures and/or movies. Image and/or video files corresponding to the pictures and/or movies may be stored in the memory 26.

The mobile telephone 12 may include a position data receiver 54, such as a global positioning system (GPS) receiver, Galileo satellite system receiver or the like. The navigation function 22 may interact with the position data receiver 54 to generate navigation prompts that direct the user to a specified destination. In another embodiment, the position data receiver 54 may be a separate accessory that interfaces to the mobile telephone 10 using a wired or wireless interface. For instance, the mobile telephone 12 also may include a local wireless interface 56, such as an infrared transceiver and/or an RF adaptor (e.g., a Bluetooth interface), for establishing communication with an accessory, another mobile radio terminal, a computer or another device. For example, the local wireless interface 56 may operatively couple the mobile telephone 12 to a headset assembly (e.g., a PHF device) in an embodiment where the headset assembly has a corresponding wireless interface.

The mobile telephone 12 also may include a broadcast transceiver 58. The broadcast transceiver 58 may be capable of generating FM broadcasts or any other appropriate broadcast or signal transmission that may be received by a compatible device that is tuned to the broadcast frequency of the transceiver 58. The transceiver 58 may be used to broadcast music, speech, or other content for reception by receivers that are located within a transmission range of the transmitter. Current transmitters for inclusion in a device such as the mobile telephone 12 typically have a range of about twenty to thirty meters and operate under an accepted broadcast standard. One such standard is radio data system (RDS) from the European Broadcasting Union. RDS is a standard for sending digital information using a conventional FM radio broadcast. RDS standardizes data transmission formats and the transmission of time data and station identification. In the United States, a similar system is radio broadcast data system (RBDS). RBDS is so similar to RDS and is so often referred to as RDS (instead of RBDS) that the term RDS, as used herein, is intended to include the European standard, the U.S. standard and another other similar approach to radio broadcasting.

In the case of the mobile telephone 12, the broadcast transceiver 58 includes at least a transmitter to transmit signals and also may include a receiver for receiving signals transmitted by another device. In the illustrated embodiment, the broadcast transceiver 58 is an integral part of the mobile telephone 12. In other embodiments, the broadcast transceiver 58 may be an accessory that is operatively interfaced with the mobile telephone 12, such as via the I/O interface 46. In another embodiment, the broadcast transceiver 58 may be combined with the radio circuit 36.

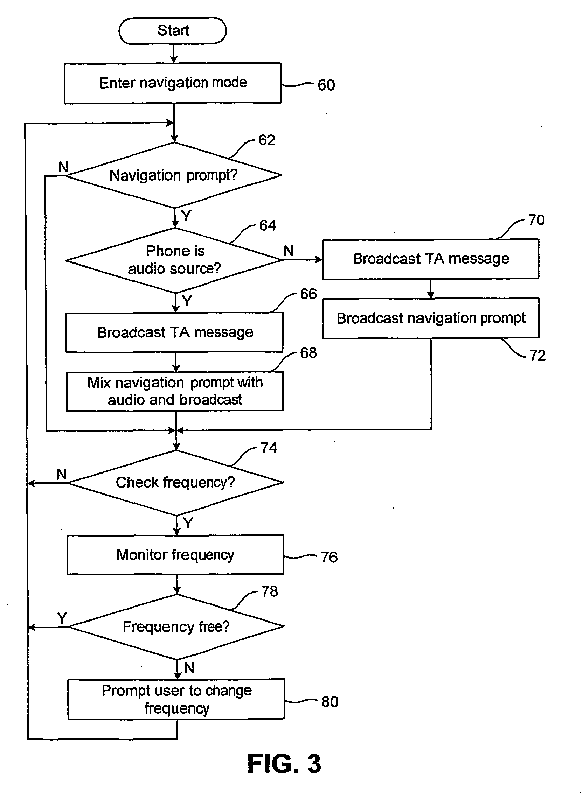

With additional reference to FIG. 3, illustrated are logical operations to implement an exemplary method of broadcasting navigation prompts for audible playback by a receiving device. The exemplary method may be carried out by executing an embodiment of the navigation function 22 with the mobile telephone 12, for example. Thus, the flow chart of FIG. 3 may be thought of as depicting steps of a method carried out by the mobile telephone 12. Although FIG. 3 shows a specific order of executing functional logic blocks, the order of executing the blocks may be changed relative to the order shown. Also, two or more blocks shown in succession may be executed concurrently or with partial concurrence. Certain blocks also may be omitted. In addition, any number of functions, logical operations, commands, state variables, semaphores or messages may be added to the logical flow for purposes of enhanced utility, accounting, performance, measurement, troubleshooting, and the like. It is understood that all such variations are within the scope of the present invention.

The broadcast of the illustrated embodiment is a radio broadcast, such as an FM broadcast under the RDS standard. Other types of broadcasts that are not addressed to a specific electronic device or devices are possible and fall within the applicant's use of the term broadcast. For example, amplitude modulation (AM) radio broadcasts, very high frequency (VHF) broadcasts and/or ultra high frequency (UHF) broadcasts could be used. Content transmitted as part of the broadcast may include any type of audiovisual content. The term "audiovisual content" broadly refers to any type of audio-based and/or video-based subject matter and may include, for example, text (e.g., a collection of alphanumeric characters), images, music, audio, speech, video, and combinations of these content types.

The logical flow for the navigation function 22 may begin in block 60 where the mobile telephone 12 enters a navigation mode. For instance, the navigation mode may be selected by a user as the result of navigating through menu choices offered as part of a graphical user interface.

Once in the navigation mode, the user may specify a destination to which the user desires to travel. Using known techniques, the navigation function 22 may determine navigation prompts to direct the user to the specified destination. As will be appreciated, the navigation prompts are typically voice-based directional cues, such as "turn left" or "turn right." Other prompts may instruct the user to drive a particular distance. The prompts may include the names of landmarks and/or streets (e.g., "turn right onto Main Street"). The prompts may be generated by using, for example, a text to speech synthesizer that "sounds-out" alphanumeric characters. Common words for navigation prompts may be prerecorded by a human speaker and stored in a database of audio clips for use as part of navigation prompts.

In block 62, a determination may be made as to whether it is an appropriate time to announce a navigation prompt to the user. This determination may be made in accordance with various known techniques for tracking the location of the mobile telephone 12 and generating the navigation prompts to direct the user to the specified destination. If a positive determination is made in block 62, the logical flow may proceed to block 64.

In block 64, a determination may be made as to whether the mobile telephone 12 is being used as an audio content source for the radio receiver system 14. For example, the mobile telephone 12 may be used to broadcast a signal using the broadcast transceiver 58 over a frequency to which the radio receiver system 14 is tuned. The signal may contain audio data derived from an audio file stored by the memory 26 of the mobile telephone 12. In this manner, songs stored in MP3 format or other suitable file format may be "played back" using the mobile telephone 12 and audibly output by speakers associated with the radio receiver system 14. Alternatively, the signal broadcast by broadcast transceiver 58 may contain audio data derived from a data stream received by the mobile telephone 12. For instance, audio content derived from a data feed (e.g., an really simple syndication (RSS) fee or podcast), a website, a digital mobile radio source, or other source may be received by the mobile telephone 12 (e.g., by way of the radio circuit 36) and re-broadcast to the radio receiver system 14 using the broadcast transceiver 58 for audible output by speakers associated with the radio receiver system 14.

If a positive determination is made in block 64, the logical flow may proceed to block 66 where the navigation function 22 controls the broadcast transceiver 58 to broadcast an RDS message to the radio receiver system 14. In one embodiment, the message contains a traffic announcement (TA) flag. Additional or alternative messages and/or flags may be used, such as a traffic program (TP) flag. Most RDS compatible radios are programmed to carry out a specified action when a TA flag and/or a TP flag is received. The programmed action tends to include increasing the volume for playback of the ensuing audio content from the broadcast source. Also, if the volume of the radio is muted, the programmed action tends to include setting the volume for playback of the ensuing audio content from the broadcast source (e.g., "un-muting" the radio). If the radio receiver system 14 is used to playback content from a non-broadcast source (e.g., a CD), the programmed action tends to include stopping or pausing the non-broadcast source and switching to a user specified radio frequency so that audio content from the broadcast source may be played to the user. Thus, the broadcast of the message in block 66 may prepare the radio receiver system 14 for the navigation prompt by increasing the volume and/or switching audio sources.

Thereafter, in block 68, the navigation prompt may be mixed with the audio content that is undergoing broadcast to the radio receiver system 14, and the mixed audio signal may be broadcast by the broadcast transceiver 58. In one embodiment, the relative volume levels of the navigation prompt and the audio content may be controlled. For instance, the volume of the navigation prompt may be higher than the volume of the audio content such that when the mixed signal is received by the radio receiver and corresponding audio is output, the navigation prompt will be more prominent over the audio content. In another embodiment, the audio content may be paused during transmission of the navigation prompt or the volume of the audio content may be reduce to an inaudible level relative to the navigation prompt. Following broadcast of the navigation prompt, playback of the audio content under the parameters (e.g., volume setting) present before logical block 68 may be restored. Also, another RDS message may be broadcast to the radio receiver system 14 so that the parameters of the radio receiver system 14 (e.g., volume and/or audio source) present before logical block 66 may be restored.

Returning to block 64, if a negative determination is made in block 64, the logical flow may proceed to block 70. In block 70, the navigation function 22 may control the broadcast transceiver 58 to broadcast an RDS message(s) having a TA flag and/or a TP flag to the radio receiver system 14. Similar to the message of block 66, the message of block 70 may prepare the radio receiver system 14 for the navigation prompt by increasing the volume and/or switching audio sources. Thereafter, in block 72, the navigation prompt may be broadcast by the broadcast transceiver 58 for receipt and audible output by the radio receiver system 14. Following broadcast of the navigation prompt, another RDS message may be broadcast to the radio receiver system 14 so that the parameters of the radio receiver system 14 (e.g., volume and/or audio source) present before logical block 66 may be restored.

The forgoing logical flow addresses at three operational scenarios so that navigation prompts may be heard by the user in each of the scenarios. The scenarios include a muted condition of the radio receiver system 14. In this scenario, the TA message will tend to "un-mute" the radio receiver system 14 for playback of the navigation prompt. Another scenario is when the user is listening to audio content broadcast to the radio receiver system 14 from the mobile telephone 12 (e.g., the mobile telephone 12 is used as a media player or receiver that, in turn, provides the content to the radio receiver system 14 by FM broadcast). In this scenario, the navigation prompt may be mixed with or played in place of the audio content. Another scenario is when the user is listening to a CD or other audio source with the radio receiver system 14. In this scenario, the TA message will tend to change the audio source of the radio receiver system 14 for playback of the navigation prompt.

As will be appreciated by one of ordinary skill in the art, the frequency to which the radio receiver system 14 is tuned and the broadcast frequency of the broadcast transceiver 58 should be coordinated. In addition, the frequency should be free from other broadcasts, and particularly broadcasts from radio station broadcasts. In view of these preferable operating conditions, the method may include steps to monitor the frequency at which the broadcast transceiver 58 is configured to broadcast. In one embodiment, following blocks 68 and 72, and following a negative determination in block 62, the logical flow may proceed to block 74. In block 74, a determination may be made as to whether it may be time to make a check of the broadcast frequency. For example, the navigation function 22 may be configured to check the broadcast frequency based on elapsed time since the last check (e.g., every five or ten minutes) and/or based on distance traveled since the last check (e.g., every five miles or every 5 kilometers). If a negative determination is made in block 74, the logical flow may return to block 62.

If a positive determination is made in block 74, the logical flow may proceed to block 76. In block 76, the broadcast frequency may be monitored. For instance, the broadcast transceiver may be placed in a reception mode and a signal strength monitor may be used to detect the strength of the incoming signal, if any. If the incoming signal strength is above a predetermined threshold, it may be concluded that a radio station or other broadcast source is present at the broadcast frequency. If the incoming signal strength is below the predetermined threshold, it may be concluded that there is no radio station or other broadcast source at the broadcast frequency and that the broadcast frequency is clear (or free) for continued transmission of navigation prompts and/or audio content. If it is determined in block 78 that the broadcast frequency is free, then the logical flow may return to block 62. If it is determined in block 78 that the broadcast frequency is not free, then the logical flow may proceed to block 80.

In block 80, the mobile telephone 12 may prompt the user to change the broadcast frequency. The prompt may be an audible prompt that is broadcast from the broadcast transceiver 58 to the radio receiver system 14, an RDS message for display and/or audible output by the radio receiver system 14, and/or a visual prompt displayed by the mobile telephone 12. Following block 80, the logical flow may return to block 62. In one embodiment, the logical flow may automatically change the broadcast frequency if user action is not taken to change the broadcast frequency or the logical flow may end if user action is not taken to change the broadcast frequency.

The method and/or navigation function 22 may be adapted to accommodate alternative devices and/or interfaces between the mobile telephone 12 and the radio receiver system 14. For instance, the mobile telephone 12 may be coupled to a vehicle audio system using a physical connection such as a cable (e.g., audio cable or USB cable) or a docking connector. Data and/or audio signals may be output to the vehicle audio system to prepare the vehicle audio system for audible output of navigation prompts in similar manner to the way the above-described TA messages are used. In another arrangement, the mobile telephone 12 may be wirelessly coupled to the vehicle audio system, such as by way of a Bluetooth, WiFi or WiMax interface. In this arrangement, data and/or audio signals may be output to the vehicle audio system to prepare the vehicle audio system for audible output of the navigation prompts in similar manner to the away the above-described TA messages are used. As another exemplary modification, the mobile telephone 12 may be replaced by a dedicate navigation device or some other device (e.g., media player, PDA or computer) that includes the navigation function 22. In still another exemplary modification, the mobile telephone 12 may receive the navigation prompts from another device (e.g., a server or a dedicated navigation device that is interfaced to the mobile telephone 12 via a wired or wireless interface). In this embodiment, the navigation function 22 of the mobile telephone 12 may serve to relay the navigation prompts generated by the external device to the radio receiver system 14 as described above.

Although the invention has been shown and described with respect to certain preferred embodiments, it is understood that equivalents and modifications will occur to others skilled in the art upon the reading and understanding of the specification. The present invention includes all such equivalents and modifications, and is limited only by the scope of the following claims.

## Claims

1. A method of broadcasting turn-by-turn navigation prompts to a radio receiver system (14) of a vehicle with an etectronic device (12), comprising:
broadcasting a message to the radio receiver system from the electronic device, the message including data that invokes a programmed response by the radio receiver system to carry out at least one of increase a volume level or switch audio sources; and
broadcasting a navigation prompt to the radio receiver system from the electronic device for audible playback by the radio receiver system, the navigation prompt providing a direction to a user of the electronic device for traveling to a destination specified by the user of the electronic device.

2. The method of claim 1, further comprising generating the navigation prompt with the electronic device.

3. The method of claim 1, further comprising receiving the navigation prompt with the electronic device.

4. The method of any of claims 1-3, further comprising broadcasting audio content for audible playback by the radio receiver system and mixing the navigation prompt with the audio content.

5. The method of any of claims 1-4, wherein the electronic device is a mobile telephone.

6. The method of any of claims 1-5, further comprising monitoring a broadcast frequency used to broadcast the navigation prompt for the presence of a radio station and if presence of a radio station is detected, prompting the user to change the broadcast frequency.

7. The method of any of claims 1-6, wherein broadcasting of the message and the navigation prompt is made using an FM transmitter.

8. The method of claim 7, wherein the broadcasting is made in accordance with radio data system (RDS).

9. The method of claim 8, wherein the message contains at least one of a traffic announcement flag or a traffic program flag.

10. A mobile radio terminal (12), comprising:
a broadcast transceiver (58) for generating FM broadcasts in accordance with radio data system (RDS); and
a controller (30) configured to control the broadcast transceiver to broadcast a message to a radio receiver system (14), the message including data that invokes a programmed response by the radio receiver system to carry out at least one of increase a volume level or switch audio sources, and to broadcast turn-by-turn navigation prompts for audible playback by the radio receiver system, the turn-by-turn navigation prompts providing a direction to a user of the electronic device for traveling to a destination specified by the user.

## Patentansprüche

1. Verfahren zum Ausstrahlen von Abbiegung-zu-Abbiegung Navigationsaufforderungen an ein Funkempfangssystem (14) eines Fahrzeugs mit einer elektronischen Vorrichtung (12), umfassend:
Ausstrahlen einer Nachricht an das Funkempfangssystem von der elektronischen Vorrichtung, wobei die Nachricht Daten beinhaltet, die eine programmierte Antwort durch das Funkempfangssystem aufruft, um wenigstens eines von einer Erhöhung eines Lautstärkepegels oder ein Umschalten von Audioquellen auszuführen; und
Ausstrahlen einer Navigationsaufforderung an das Funkempfangssystem von der elektronischen Vorrichtung zum hörbaren Abspielen durch das Funkempfangssystem,
wobei die Navigationsaufforderung eine Richtung für einen Benutzer der elektronischen Vorrichtung zum Reisen an ein Ziel, das durch den Benutzer der elektronischen Vorrichtung spezifiziert wird, bereitstellt.

2. Verfahren nach Anspruch 1, weiterhin umfassend Erzeugen der Navigationsaufforderung mit der elektronischen Vorrichtung.

3. Verfahren nach Anspruch 1, weiterhin umfassend Empfangen der Navigationsaufforderung mit der elektronischen Vorrichtung.

4. Verfahren nach einem der Ansprüche 1-3, weiterhin umfassend Ausstrahlen von Audioinhalt zum hörbaren Abspielen durch das Funkempfangssystem und Mischen der Navigationsaufforderung mit dem Audioinhalt.

5. Verfahren nach einem der Ansprüche 1-4, wobei die elektronische Vorrichtung ein Mobiltelefon ist.

6. Verfahren nach einem der Ansprüche 1-5, weiterhin umfassend Überwachen einer Ausstrahlungsfrequenz, die zur Ausstrahlung der Navigationsaufforderung für die Gegenwart einer Funkstation verwendet wird, und wenn die Gegenwart einer Funkstation erfasst wird, Auffordern des Benutzer, die Ausstrahlungsfrequenz zu ändern.

7. Verfahren nach einem der Ansprüche 1-6, wobei Ausstrahlen einer Nachricht und der Navigationsaufforderung unter Verwendung eines FM Senders durchgeführt wird.

8. Verfahren nach Anspruch 7, wobei das Ausstrahlen entsprechend einem Funkdatensystem (RDS) durchgeführt wird.

9. Verfahren nach Anspruch 8, wobei die Nachricht wenigstens eins von einem Verkehrsmeldungs-Flag oder einem Verkehrsprogramm-Flag beinhaltet.

10. Mobilfunk-Endgerät (12), umfassend:
einen Ausstrahlungsempfänger zum Erzeugen von FM Ausstrahlungen entsprechend einem Funkdatensystem (RDS) ; und
einen Regler, der dazu einreichtet ist, den Ausstrahlungsempfänger zu regeln, um eine Nachricht an ein Funkempfangssystem (14) auszustrahlen, wobei die Nachricht Daten beinhaltet, die eine programmierte Antwort durch das Funkempfangssystem aufruft, um wenigstens eines von einer Erhöhung eines Lautstärkepegels oder ein Umschalten von Audioquellen auszuführen, und um Abbiegung-zu-Abbiegung Navigationsaufforderungen auszustrahlen zum hörbaren Abspielen durch das Funkempfangssystem, wobei die Abbiegung-zu-Abbiegung Navigationsaufforderungen eine Richtung für einen Benutzer der elektronischen Vorrichtung zum Reisen an ein Ziel, das durch den Benutzer der elektronischen Vorrichtung spezifiziert wird, bereitstellen.

## Revendications

1. Procédé de radiodiffusion d'invites de navigation tour à tour vers un système de récepteur de radio (14) d'un véhicule avec un dispositif électronique (12), comprenant :
la radiodiffusion d'un message vers le système de récepteur de radio à partir du dispositif électronique, le message comprenant des données qui appellent une réponse programmée du système de récepteur de radio, consistant à effectuer au moins l'une d'une augmentation d'un niveau de volume ou d'une commutation de sources audio; et
la radiodiffusion d'une invite de navigation vers le système de récepteur de radio à partir du dispositif électronique pour une reproduction audible par le système de récepteur de radio, l'invite de navigation donnant une direction à un utilisateur du dispositif électronique pour se déplacer vers une destination spécifiée par l'utilisateur du dispositif électronique.

2. Procédé selon la revendication 1, comprenant de plus la génération de l'invite de navigation avec le dispositif électronique.

3. Procédé selon la revendication 1, comprenant de plus la réception de l'invite de navigation avec le dispositif électronique.

4. Procédé selon l'une quelconque des revendications 1 à 3, comprenant de plus la radiodiffusion d'un contenu audio pour une reproduction audible par le système de récepteur de radio et le mélange de l'invite de navigation au contenu audio.

5. Procédé selon l'une quelconque des revendications 1 à 4, dans lequel le dispositif électronique est un téléphone mobile.

6. Procédé selon l'une quelconque des revendications 1 à 5, comprenant de plus le contrôle d'une fréquence de radiodiffusion utilisée pour radiodiffuser l'invite de navigation en ce qui concerne la présence d'une station de radio, et, si la présence d'une station de radio est détectée, le fait d'inviter l'utilisateur à changer la fréquence de radiodiffusion.

7. Procédé selon l'une quelconque des revendications 1 à 6, dans lequel la radiodiffusion du message et de l'invite de navigation est effectuée à l'aide d'un émetteur à modulation de fréquence.

8. Procédé selon la revendication 7, dans lequel la radiodiffusion est effectuée selon un système de données de radio (RDS).

9. Procédé selon la revendication 8, dans lequel le message contient au moins l'un parmi un indicateur d'annonce de trafic ou un indicateur de programme de trafic.

10. Terminal de radio mobile (12), comprenant :
un émetteur-récepteur de radiodiffusion (58) pour générer des radiodiffusions en modulation de fréquence selon un système de données de radio (RDS) ; et
un dispositif de commande (30) configuré de façon à commander l'émetteur-récepteur de radiodiffusion afin de radiodiffuser un message vers un système de récepteur de radio (14), le message comprenant des données qui appellent une réponse programmée du système de récepteur de radio, consistant à effectuer au moins l'une d'une augmentation d'un niveau de volume ou d'une commutation de sources audio, et afin de radiodiffuser des invites de navigation tour à tour pour une reproduction audible par le système de récepteur de radio, les invites de navigation tour à tour donnant une direction à un utilisateur du dispositif électronique pour se déplacer vers une destination spécifiée par l'utilisateur.
